(19) Europäisches Patentamt
European Patent Office
Office européen des brevets

(11) EP 0 482 250 B1

(12) **EUROPEAN PATENT SPECIFICATION**

(45) Date of publication and mention
of the grant of the patent:
**17.01.1996 Bulletin 1996/03**

(51) Int Cl.⁶: **G05D 1/06**, F02C 9/44

(21) Application number: **90202852.1**

(22) Date of filing: **25.10.1990**

(54) **Automatic airspeed control system for airplane autothrottles**

Luftgeschwindigkeitsregelsystem für Flugzeugvortriebsregler

Système de régulation automatique de vitesse par rapport à l'air pour une commande de gaz d'avion

(84) Designated Contracting States:
**DE FR GB IT NL**

(43) Date of publication of application:
**29.04.1992 Bulletin 1992/18**

(73) Proprietor: **THE BOEING COMPANY
Seattle, Washington 98124-2207 (US)**

(72) Inventors:
• **Blechen, Frederick C,
Redmond, WA 98052 (US)**
• **Jackson, Douglas O.
Mercer Island, WA 98040 (US)**

(74) Representative: **Hoijtink, Reinoud et al
NL-2517 GK Den Haag (NL)**

(56) References cited:
GB-A- 2 088 961       GB-A- 2 226 430
US-A- 4 266 743

## Description

### Technical Area

This invention relates to airplane control systems and, more particularly, airspeed control systems for autothrottles.

### Background of the Invention

Many commercial airplanes, particularly large commercial airplanes, include automatic throttle systems (autothrottles) for controlling the airspeed of the airplane, particularly during the cruise portion of a flight. Fuel consumption is minimized and pilot confidence and acceptance of autothrottles is increased by autothrottles that control airplane cruise airspeed with minimum throttle activity (i.e., minimum throttle change). More specifically, accurate control of airplane airspeed is important because excess airspeed increases fuel consumption and lower than necessary airspeed increases flight time and other costs. Excessive throttle activity, overshoots, or throttle hunting also increase fuel consumption. Excessive throttle activity, overshoots, or throttle hunting also cause pilots to lose confidence in autothrottles. Loss of confidence may lead a pilot to disconnect an autothrottle system and control airspeed manually. Manual control often leads to worse airspeed control and additional fuel consumption because it is difficult for a pilot to continuously monitor airspeed and the airspeed excursions that result from throttle changes and wind changes.

In the past, autothrottles have primarily used airspeed error to control throttle position. When an airplane is slow, the throttles are moved forward to increase airspeed and, when an airplane is fast, the throttles are moved aft to decrease airspeed. This approach requires that an airspeed error exists before corrective action takes place. In order to minimize the airspeed error required to produce the throttle motion necessary to eliminate the error, prior art autothrottles have increased system gain. Unfortunately, increasing system gain leads to excessive throttle activity when normal wind turbulence is encountered. While various filters can be included in the airspeed input channel of autothrottles to reduce throttle activity due to wind turbulence, the inclusion of filters has several disadvantages. Specifically, the inclusion of filters introduces lags in autothrottle response time and causes airspeed and throttle activity overshooting because of the delay that occurs between the time airspeed information is received and when it is used to control throttle motion.

From GB-A-2,088,961 a fuel control system for a Gas Turbine Engine, adjusting the fuel flow to the engine to produce a desired thrust means are provided to approximate the trim which will be required when the steady state is reached. This is applied throughout transients so that when the desired thrust is achieved only second-order changes need to be made.

The present invention is directed to providing an automatic airspeed control system for an autothrottle that avoids the foregoing and other disadvantages. More specifically, the present invention is directed to providing an automatic airspeed control system for an autothrottle that controls airplane cruise speed more accurately and with less throttle activity than prior art airspeed control systems used in autothrottles. As a result, fuel consumption is reduced and pilot confidence and acceptance are increased.

### Summary of the Invention

In accordance with this invention, an automatic airspeed control system for an airplane autothrottle that provides rapid, accurate thrust settings when an airplane is rising to (i.e., acquiring) a new altitude, making a turn, encountering winds and changing airspeeds with a minimum of lag and error is provided. In accordance with the invention, a predicted current thrust value is summed with a fine tune value, which is based on airspeed error, and the result is used to control airplane engine thrust via a closed loop control system.

In accordance with other aspects of this invention, the predicted thrust value is created by summing the predicted airplane current steady state thrust value created, in a conventional manner, by the autothrottle of the airplane with a prediction correction value that compensates for airplane-to-airplane differences and changes that occur due to airplane aging. The thusly corrected predicted steady state thrust value is summed with an altitude acquire change thrust value and an airspeed change thrust value. The altitude acquire change thrust value is produced when an altitude change has been commanded by the autopilot. The airspeed change thrust value is produced when an airspeed change has been commanded by the autopilot system of the airplane, or wind or some other factor causes a non-autopilot commanded airspeed change. The airspeed change may be due to an autopilot commanded maneuver, e.g., a turn. More specifically, the commanded and wind airspeed change increment thrust values are based on the difference or error between the target airspeed set by the autopilot of the airplane and the actual airspeed of the airplane. An airspeed change increment thrust value is produced and automatically summed with the corrected predicted steady state thrust value when the autopilot commands an airspeed change. The wind change increment thrust value is produced and automatically summed with the corrected predicted steady state thrust value when an error exists between the autopilot commanded airspeed and the actual airspeed of the airplane, and the autopilot has not commanded an airspeed change. The altitude acquire change thrust value is based on the difference between the climb thrust and the cruise thrust of the airplane multiplied by an altitude acquire factor, preferably determined by taking the square root of the difference between the current altitude and the altitude to be acquired (Δh) divided by the difference between the starting altitude and the altitude to be acquired (d). The altitude acquire thrust change value is produced and automatically summed with the corrected predicted steady state thrust value when an altitude capture is commanded by the autopilot of the airplane.

In accordance with further aspects of this invention, the fine tune value is obtained from a control loop that filters, integrates and applies a variable gain to airspeed errors. The variable gain is low when airspeed error is small and increases to a maximum for larger airspeed errors.

In accordance with still further aspects of this invention, the control loop includes two paths, both of which include a variable gain. In addition, one path includes a second order filter and the other includes an integrator. Both paths receive an airspeed error value, i.e., a value that defines the difference between the target airspeed selected by the autopilot of the airplane and the actual airspeed of the airplane. The outputs of the two channels are summed and the result forms the fine tune value.

As will be readily appreciated from the foregoing description, the invention provides an automatic airspeed control system for an autothrottle that controls airplane cruise airspeed more accurately and with less throttle activity than prior art systems. Because airspeed is controlled more accurately and with less throttle activity, fuel consumption is reduced. Further, pilot confidence and acceptance of the autothrottle is increased. These results are achieved by virtue of the creation of a predicted thrust value that is produced by combining a corrected predicted steady state thrust value with thrust increment values created by airspeed changes resulting from autopilot airspeed and altitude acquire commands and external conditions (e.g., wind). Minimal overshoot and hunting during climb results from the way the altitude acquisition change thrust value is generated, i.e., by multiplying the difference between climb and cruise thrust by a smoothing factor, preferably the square root of the difference between the current altitude during the climb and the altitude to be acquired (Δh) divided by the difference between the starting or original altitude and the altitude to be acquired (d). The inclusion of a fine tune variable gain control loop creates minimal throttle activity when airspeed errors are small and increased throttle activity when airspeed errors are high.

## Brief Description of the Drawings

The foregoing objects and many of the attendant advantages of this invention will become more readily appreciated as the same becomes better understood by reference to the following detailed description when taken in conjunction with the accompanying drawings wherein:

FIGURE 1 is a block diagram illustrating an automatic airspeed control system for airplane autothrottles formed in accordance with this invention;

FIGURE 2 is a control system diagram illustrating the presently preferred way of creating a prediction correction value for the automatic airspeed control system illustrated in FIGURE 1;

FIGURE 3 is a control system diagram illustrating the presently preferred way of creating an altitude acquire change thrust value for the automatic airspeed control system illustrated in FIGURE 1;

FIGURE 4 is pictorial diagram illustrating the smoothing effect of the control system illustrated in FIGURE 3;

FIGURES 5 and 6 form a control system diagram that illustrates the presently preferred way of creating a commanded and wind speed change thrust value for the automatic airspeed control system illustrated in FIGURE 1;

FIGURE 7 is a control system diagram illustrating the presently preferred way of forming a filter included in the fine tune loop of the automatic airspeed control system illustrated in FIGURE 1;

FIGURE 8 is a pictorial diagram illustrating the gain characteristic of the variable gain circuit included in the fine tune loop of the automatic airspeed control system illustrated in FIGURE 1; and

FIGURES 9 and 10 form a reset logic diagram suitable for use in the fine tune loop of the automatic airspeed control system illustrated in FIGURE 1.

## Description of the Preferred Embodiment

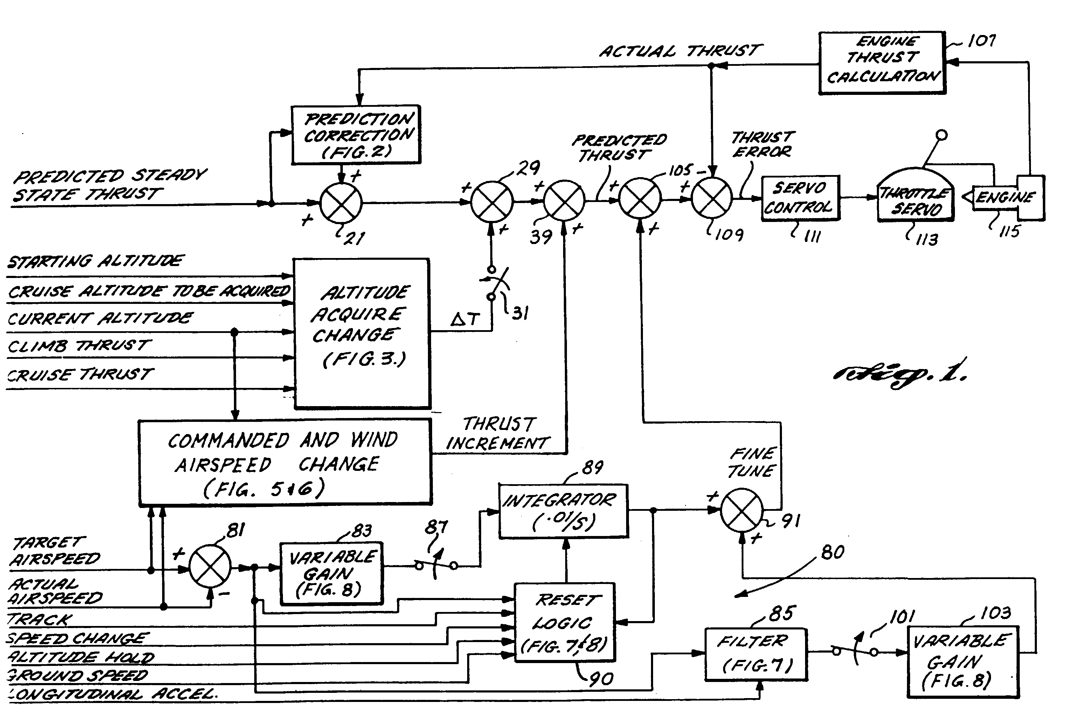

FIGURE 1 illustrates an automatic airspeed control system for an airplane autothrottle formed in accordance with the invention. The airspeed control system provides rapid, accurate thrust settings when an airplane is climbing, making a turn, encountering winds and changing airspeed with a minimum of lag and error. A predicted steady state thrust value generated, in a conventional manner, by the autothrottle of the airplane is additively summed in a first summer 21 with a prediction correction value. The prediction correction value compensates for airplane-to-airplane differences and changes that occur due to airplane aging. That is, the prediction correction value compensates for small differences between airplanes, engines and sensors, resulting from manufacturing differences and changes that occur with airplane aging. The prediction correction value also compensates for minor prediction algorithm errors, i.e., minor errors in the autothrottle algorithm used to create the predicted steady state thrust value. The prediction correction value is built up slowly over time. The presently preferred way of generating the prediction correction value is illustrated in FIGURE 2 and described next.

As shown in FIGURE 2, the presently preferred way of generating the prediction correction value is to subtractively combine the actual thrust of the aircraft derived from the engine control servo loop, in the manner illustrated in FIGURE 1 and described below, with the predicted steady state thrust value generated by the autothrottle in a second summer 23. The error between these values, i.e., the output of the second summer 23, is applied through a first switch 25 to the input of a long-time constant integrator 27. A suitable integrator time constant value is .0001, resulting in the integrator being definable by the Laplace transform .0001/S. The switch 25 is only closed when the aircraft is in an altitude hold state and the airspeed error, i.c., the error between the actual airspeed of the airplane and the autopilot commanded target airspeed is relatively low--5,55 km [3 knots], for example. As a result, as noted above, the prediction correction value is slowly built up over time. In effect, the prediction correction value compensates for thrust errors, i.e., the error between actual steady state thrust and predicted steady state thrust, during cruise. Because the prediction correction value corrects for airplane-to-airplane differences and airplane aging, the output of the first summer 21 of FIGURE 1 is a corrected predicted steady state thrust value. Because steady state only occurs at cruise, the output of the first summer can also be defined as a corrected predicted cruise thrust value.

The output of the first summer 21 is additively summed with an altitude acquire change thrust value (ΔT) in a third summer 29. The altitude acquire change thrust value (ΔT) is applied to the third summer via a second switch 31. The altitude acquire change thrust value, ΔT, is based on the difference between the climb thrust necessary to achieve a desired cruise altitude and the thrust required to maintain the cruise altitude after it is acquired. The second switch 31 is closed during the period of time the airplane is climbing from its original or starting altitude to the cruise altitude to be acquired.

FIGURE 3 is a block diagram illustrating, in mathematical form, the presently preferred way of producing the altitude acquire change thrust value, ΔT. A fourth summer 33 subtractively sums the starting or reference altitude with the cruise altitude to be acquired. The result of the subtractive summation is a difference altitude designated d. A fifth summer 35 subtractively sums the cruise altitude to be acquired with the current altitude of the airplane, which continuously changes as the airplane climbs. The result of this subtractive summation is a difference altitude designated Δh. As shown in a block 37 in FIGURE 3, ΔT is equal to the square root of Δh divided by d times the difference between the airplane's climb thrust and the airplane's cruise thrust.

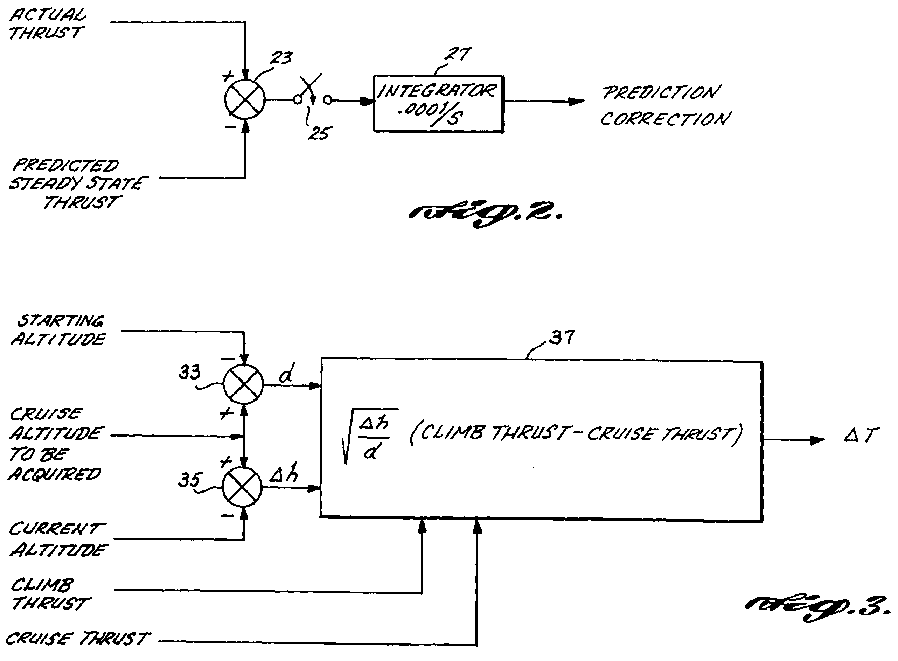

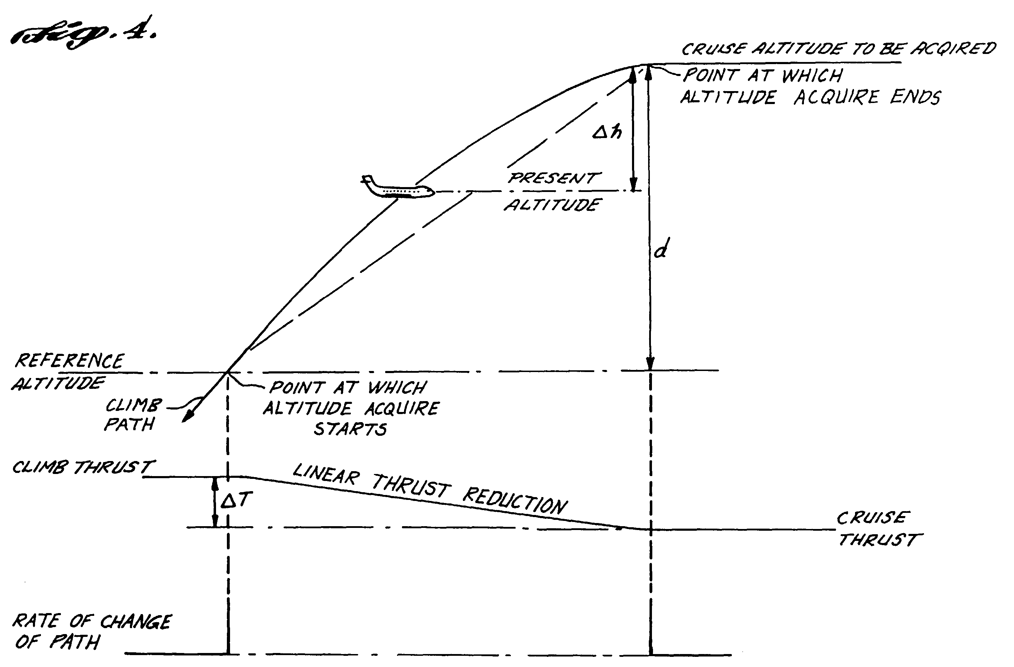

FIGURE 4 illustrates that, in accordance with the invention, the difference between climb and cruise thrust is modified to linearly match the rate of change of the Dath. The thrust reduction from climb to cruise thrust is accomplished bv adding the difference between climb thrust and cruise thrust, multiplied by

$$\sqrt{\frac{\Delta h}{d}},$$

to the predicted cruise thrust to provide the linear thrust reduction required for an altitude acquire maneuver. The square root of the altitude error factor,

$$\sqrt{\frac{\Delta h}{d}},$$

proportionally ramps the altitude acquire change thrust value, ΔT, such that a smooth linear transition occurs between climb and cruise thrust.

The output of the third summer 29 is additively summed in a sixth summer 39 with an airspeed change thrust increment value. An airspeed change thrust increment value is produced in either of two ways. First, it is produced when the autopilot of the aircraft commands a change in airspeed. Second, it is produced when an error exists between the autopilot commanded airspeed and the actual airspeed of the aircraft, but the autopilot has not commanded an airspeed change. Airspeed errors in the absence of an airspeed change command most commonly occur when wind velocity changes. Hence, for purposes of this application, non-autopilot commanded airspeed changes are generically denoted wind airspeed changes, it being understood that factors other than wind can create a non-autopilot commanded airspeed change.

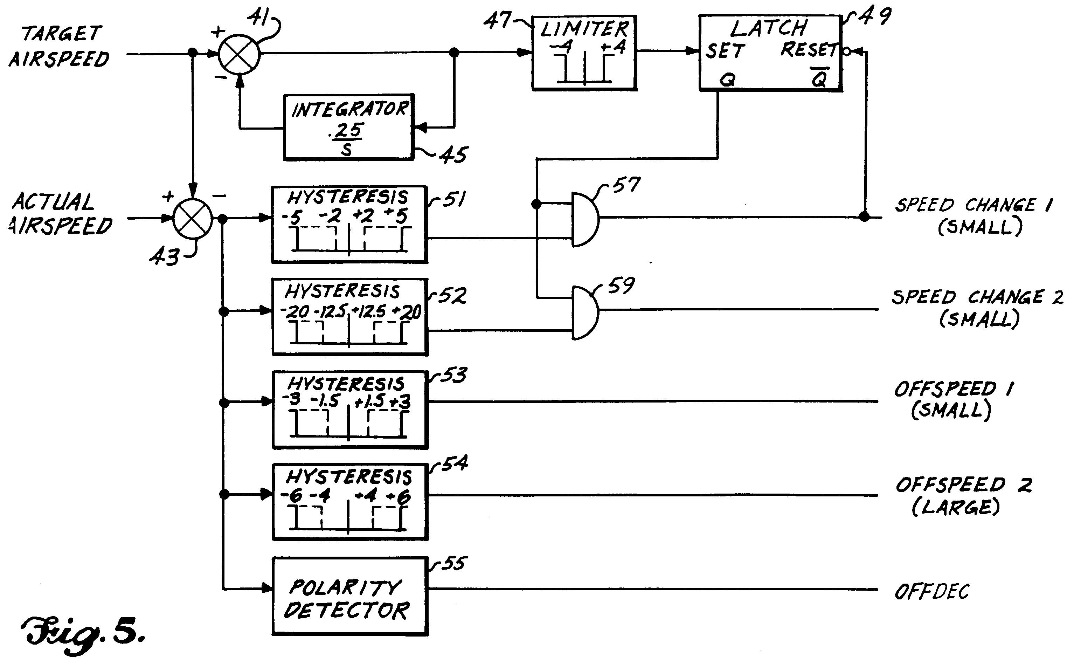

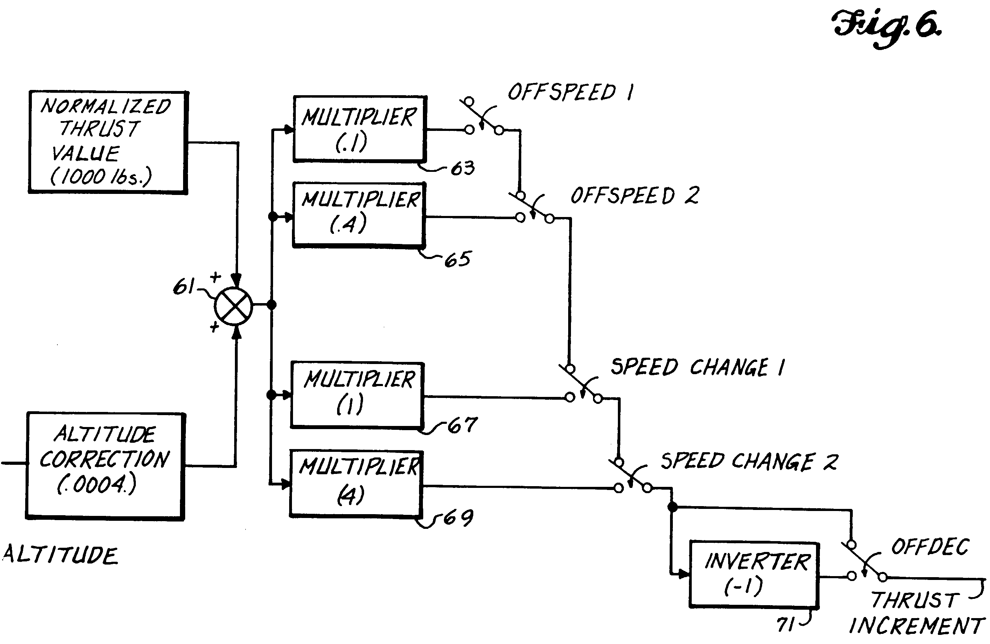

FIGURES 5 and 6 are a block diagram illustrating, in control system form, the presently preferred way of producing an airspeed change thrust increment value. FIGURE 5 illustrates a control system that generates switch control signals that control switches illustrated in FIGURE 6. FIGURE 6 illustrates a control system for producing an airspeed change thrust increment value based on the setting of the switches. Turning first to FIGURE 5, a target airspeed signal, i.e., a signal denoting the airspeed commanded by the autopilot of the aircraft, is applied to the positive input of a seventh summer 41 and to the negative input of an eighth summer 43. The seventh and eighth summers are both subtractive summers. The output of the seventh summer 41 is applied to the input of an integrator 45 and to the input of a limiter 47. The output of the limiter 47 is applied to the SET input of a latch 49. The output of the integrator 45 is applied to the negative input of the seventh summer 41. Preferably the integrator 45 is a time constant of .25 whereby the Laplace transform of the integrator is .25/s. The limiter 47 prevents the application of signals to the SET input of the latch 49 whose magnitude lie below a predetermined value, such as ±7,4 km [±4 knots], for example.

A signal denoting the actual airspeed of the aircraft is applied to the positive input of the eighth summer 43. The output of the eighth summer 43 is applied to the inputs of first, second, third, and fourth hysteresis circuits 51, 52, 53, and 54, and to the input of a polarity detector 55. The hysteresis circuits produce binary one outputs when their inputs rise above a predetermined high value and binary zero outputs when their inputs drop below a predetermined low value. In the case of the first hysteresis circuit 51, a suitable high value is ±9,26 km [±5 knots] and a suitable low value is ±3,7 km [±2 knots]. In the case of the second hysteresis circuit 52, a suitable high value is ±37 km [±20 knots] and a suitable low value is ±23,15 km [±12.5 knots]. In the case of the third hysteresis circuit 53, a suitable high value is ±5,55 km [±3 knots] and a suitable low value is ±2,78 km [±1.5 knots]. In the case of the fourth hysteresis circuit 54, a suitable high value is ±11,11 km [±6 knots] and a suitable low value is ±7,4 km [±4 knots].

The output of the first hysteresis circuit 51 is applied to one input of a first two input AND gate 57. The output of the second hysteresis circuit 52 is applied to one input of a second two input AND gate 59. The Q output of the latch 49 is applied to the second inputs of the first and second AND gates 57 and 59. The output of the first AND gate 57 is a signal denoted SPEED CHANGE 1. In addition to being used to control the state of a switch illustrated in FIGURE 6 and described below, the output of the first AND gate 57 is applied to the RESET input of the latch 49. As illustrated by the negate symbol on the RESET input of the latch 49, the latch is reset on a binary one-to-zero transition. The output of the second AND gate 59 is a signal designated SPEED CHANGE 2. The binary state of the SPEED CHANGE 2 signal controls the state of another switch illustrated in FIGURE 6 and described below.

The output of the third hysteresis circuit 53 is a signal designated OFFSPEED 1 and the output of the fourth hysteresis circuit is a signal designated OFFSPEED 2. The binary states of OFFSPEED 1 and OFFSPEED 2 control the states of a pair of switches illustrated in FIGURE 6 and described below. The output of the polarity detector is a signal designated OFFDEC. The binary state of the OFFDEC signal controls the state of a further switch illustrated in FIGURE 6 and described below.

As will be readily appreciated by those skilled in the art and others from the foregoing description and viewing FIGURE 5, the seventh summer 41 in combination with the integrator 45 form a washout circuit that washes out slow changes in the target airspeed signal, i.e., prevents slow changes in the target airspeed signal from setting the latch 49. More specifically, as long as target airspeed signal changes are slow enough to allow the output of the integrator to counteract, i.e., wash out, the changing signal before the output rises to a level adequate to trigger the limiter 47, i.e., rises above or drops below ±7,4 km [±4 knots], the latch 49 is not set. The latch 49 is not set because the output of the limiter remains low as long as the signal input to the limiter lies between ±7,4 km [±4 knots]. If the limiter input rises above +7,4 km [+4 knots] or drops below -7,4 km [-4 knots], the output of the limiter shifts from a low, i.e., binary zero, state to a high, i.e., binary one, state. The shift from a low state to a high state sets the latch 49. Thus, only rapid changes in the target airspeed signal that cause the output of the seventh summer 41 to exceed ±7,4 km [±4 knots] causes the output of the limiter 47 to shift from a low state to a high state and the latch 49 to be set. When the latch 49 is set, its Q output goes high, whereby the first and second AND gates 57 and 59 are enabled to pass the outputs of the first and second hysteresis circuits 51 and 53.

If the difference between the target or commanded airspeed and the actual airspeed, which is determined at the output of the eighth summer 43, rises above or drops below 9,26 km [5 knots], the output of the first hysteresis circuit 51 shifts from a low, i.e., binary zero, state to a high, i.e., binary one, state. This results in the SPEED CHANGE 1 signal shifting from a binary zero state to a binary one state, provided, of course, that the airspeed change was commanded by the autopilot and was rapid enough to set the latch 49 and enable the first AND gate 57 in the manner heretofore described. Thereafter, when the speed error (i.e., the difference between the target airspeed and the actual airspeed) drops below ±3,7 km [±2 knots], the output of the first hysteresis circuit 51 shifts from a binary one state to a binary zero state, resulting in the SPEED CHANGE 1 signal shifting from a binary one state to a binary zero state. This change resets the latch 49 and returns a switch illustrated in FIGURE 6 and described below to its quiescent state.

If the airspeed error rises above the high limits set by the second hysteresis circuit, i.e., above ±37 km [±20 knots], the output of the second hysteresis circuit 52 shifts from a binary zero state to a binary one state. When the output of the second hysteresis circuit 52 shifts from a binary zero state to a binary one state, the SPEED CHANGE 2 signal shifts from a binary zero state to a binary one state, assuming again that the airspeed change was commanded by the autopilot and was rapid enough to set the latch 49. When the airspeed error thereafter drops below the lower limits set by the second hysteresis circuit, i.e., below ±23,15 km [±12.5 knots], the output of the second hysteresis circuit 52 returns to a binary zero state, whereby the SPEED CHANGE 2 signal shifts from a binary one state to a binary zero state. As will be better understood from the following description of FIGURE 6, the state of SPEED CHANGE 2 controls the state of a switch.

Whenever the airspeed error, i.e., the output of the eighth summer, rises above ±5,55 km [±3 knots], the output of the third hysteresis circuit shifts from a binary zero state to a binary one state. Thus, the OFFSPEED 1 signal shifts from a binary zero state to a binary one state. When the airspeed error thereafter drops below ±2,77 km [±1.5 knots], the output of the third hysteresis circuit and, thus, OFFSPEED 1, returns to a binary zero state. When the airspeed error rises above ±11,11 km [±6 knots] the output of the fourth hysteresis circuit shifts from a binary zero state to a binary one state. Thus, the OFFSPEED 2 signal shifts from a binary zero state to a binary one state. When the airspeed error thereafter drops below ±7,4 km [±4 knots] the output of the fourth hysteresis circuit and, thus, OFFSPEED 2, returns to a binary zero state.

As will be readily appreciated from the foregoing description, the outputs of the first, second, third, and fourth hysteresis circuits overlap. For example, a rapid change in autothrottle speed setting creating a greater than 37 km [20-knot] airspeed error will cause both SPEED CHANGE and both OFFSPEED signals to shift from binary zero states to binary one states. Rapid autothrottle changes creating a less than 37 km [20-knot] but greater than 9,26 km [5-knot] airspeed error will cause the SPEED CHANGE 1 and both OFFSPEED signals to shift from binary zero states to binary one states. Both rapid and slow speed changes creating an airspeed error greater than 11,11 km [6 knots] will cause both OFFSPEED signals to shift from binary zero states to binary one states, regardless of whether either or both of the SPEED CIIANGE signals change states. Both rapid and slow speed changes creating an airspeed error greater than 5,55 km [3 knots] but less than 11,11 km [6 knots] will cause the OFFSPEED 1 signal but not the OFFSPEED 2 signal to shift from a binary zero state to a binary one state regardless of whether both of the SPEED CHANGE signals change state.

As will be understood from the following description of FIGURE 6, only one of SPEED CHANGE 1, SPEED CHANGE 2, OFFSPEED 1, and OFFSPEED 2 signals controls the value of the airspeed change thrust increment to the sixth summer 39. In general, SPEED CHANGE 2 controls if the latch 49 is set and the magnitude of the airspeed error is greater than ±37 km [±20 knots] SPEED CHANGE 1 controls if the latch is set and the airspeed error is greater than ±9,26 km [±5 knots], but less than ±37 km [±20 knots]. OFFSPEED 2 controls if the latch 49 is not set and the airspeed error is greater than ±11,11 km [±6 knots]. OFFSPEED 1 controls if the latch is not set and the airspeed error is greater than ±5,55 km [±3 knots], but less than ±11,11 km [±6 knots].

The polarity detector 55 responds to the polarity of the speed error signal. When the actual speed of the aircraft is less than the target airspeed, the output of the polarity detector is in a binary one state. When the actual airspeed of the aircraft is above the target airspeed, the output of the polarity detector 55 is in a binary zero state.

As shown on the left side of FIGURE 6, a normalized, fixed thrust value is additively summed with an altitude correction factor by a ninth summer 61. More specifically, a signal representing a specific thrust value, such as 4,53,6 kg [1,000 pounds], normalized for a specific altitude, i.e., sea level, is applied to one input of the ninth summer 61. An altitude signal generated by the altimeter of the aircraft controls the magnitude of an altitude correction factor, which is applied to the second input of the ninth summer 61. The altitude correction is, thus, based on the altitude of the aircraft. The correction factor may, for example, be equal to .0004 for each 30,48 cm [foot] above sea level.

The output of the ninth summer 61 is applied to the inputs of four multiplier circuits 63, 65, 67 and 69. The first and second multiplier 63 and 65 are associated with two switches whose states are controlled by the states of the OFFSPEED 1 and OFFSPEED 2 signals. The third and fourth multipliers 67 and 69 are associated with two switches whose states are controlled by the states of the SPEED CHANGE 1 and SPEED CHANGE 2 signals. For convenience of illustration, all of these switches are schematically shown as single-poled double throw switches. In an actual embodiment of the invention, the switches would be either software switches or semiconductor switches controlled by binary zero and one voltages. When the controlling signal is in a binary zero state, the common terminal of the related switch is connected to the upper remote terminal of the switch. When the controlling signal is in a binary one state, the common terminal of the related switch is connected to the lower remote terminal of the switch. While different values can be used, preferably, the multiplication factor of the first multiplier 63 is 0.1, the multiplication factor of the second multiplier 65 is 0.4, the multiplication factor of the third multiplier 67 is 1.0, and the multiplication factor of the fourth multiplier 69 is 4.0.

The output of the first multiplier 63 is applied to the lower remote terminal of the switch controlled by the OFFSPEED 1 signal. The upper remote terminal of this switch is unconnected. The common terminal of the switch controlled by the OFFSPEED 1 signal is connected to the upper remote terminal of the switch controlled by the OFFSPEED 2 signal. The output of the second multiplier is applied to the lower remote terminal of this switch. The common terminal of the switch controlled by the OFFSPEED 2 signal is connected to the upper remote terminal of the switch controlled by the SPEED CHANGE 1 signal. The output of the third multiplier 67 is connected to the lower remote terminal of this switch. The common terminal of the switch controlled by the SPEED CHANGE 1 signal is connected to the upper remote terminal of the switch controlled by the SPEED CHANGE 2 signal. The output of the fourth multiplier 69 is connected to the lower remote terminal of this switch. The common terminal of the switch controlled by the SPEED CHANGE 2 signal is connected to the input of an inverter 71 and to the upper remote terminal of a further switch controlled by the OFFDEC signal. The output of the inverter 71 is connected to the lower remote terminal of the same switch. The common terminal of the switch controlled by the OFFDEC signal is connected to the sixth summer (FIGURE 1). Thus, the airspeed thrust increment signal is formed at the common terminal of the switch controlled by the OFFDEC signal.

As will be readily appreciated from the foregoing description and viewing FIGURE 6, the switches controlled by the OFFSPEED 1, OFFSPEED 2, SPEED CHANGE 1, and SPEED CHANGE 2 signals form a switch network that functions in the manner described above. If all of the switch control signals are in a binary one state, the switch controlled by the SPEED CHANGE 2 signal controls the magnitude of the airspeed thrust increment because only the output of the fourth multiplier 69 is connected to the inverter 71 and the upper terminal of the switch controlled by the OFFDEC signal. If the SPEED CHANGE 2 signal is in a binary zero state and SPEED CHANGE 1, OFFSPEED 2, and OFFSPEED 1 are all in binary one states, SPEED CHANGE 1 controls because only the output of the third multiplier 67 is connected to the input of the inverter 71 and the upper terminal of the switch controlled by the OFFDEC signal. If SPEED CHANGE 1 and SPEED CHANGE 2 are both in binary zero states and OFFSPEED 1 and OFFSPEED 2 are in binary one states, OFFSPEED 2 controls because only the output of the second multiplier 65 is connected to the input of the inverter and the upper terminal of the switch controlled by the OFFDEC signal. Finally, if the SPEED CHANGE 2, SPEED CHANGE 1, and OFFSPEED 2 signals are all in binary zero states and OFFSPEED 1 is in a binary one state, OFFSPEED 1 controls because only the output of the first multiplier is connected to the input of the inverter and the upper terminal of the switch controlled by the OFFDEC signal.

In summary, the magnitude of the thrust increment signal is determined by the magnitude of the airspeed error. Airspeed errors caused by wind or other non-autothrottle controlled factors generate relatively small thrust increment signals. Very small wind-created airspeed errors cause very small thrust increment signals, whereas higher wind-created airspeed errors cause the generation of higher thrust increment signals. More specifically, low wind-created airspeed errors create a relatively small airspeed change thrust increment value because the first multiplier multiplies the output of the ninth adder 61 by a relatively small factor, e.g., 0.1. Larger wind-created airspeed errors create larger airspeed change thrust increment values because the second multiplier multiplies the output of the ninth adder 61 by a larger factor, e.g, 0.4. Small autothrottle-created airspeed errors create small airspeed change thrust increment values because the third multiplier multiplies the output of the ninth summer by a relatively small factor, e.g., 1. Contrariwise, higher autothrottle-created airspeed errors cause higher airspeed change thrust increment values because the fourth multiplier multiplies the output of the ninth adder 61 by a higher factor, e.g., 4.

As shown in FIGURE 1, prior to being used to control the thrust of the engine, the output of the sixth summer 39 is fine tuned by the output of a variable gain, continuous airspeed error control loop 80. The variable gain of this control loop is low when the actual airspeed of the airplane is near the target airspeed. As a result, throttle activity is minimized when airspeed errors are low. Gain and, thus, throttle activity increases for larger airspeed errors.

The variable gain, continuous airspeed error control loop 80 includes a tenth summer 81. The tenth summer 81 is a subtractive summer that sums the target airspeed commanded by the autopilot with the actual airspeed of the airplane. The resultant error is applied to a first variable gain circuit 83 and to a filter network 85. The output of the variable gain circuit 83 is applied through a third switch 87 to the input of an integrator 89. Preferably, the time constant of the integrator is 0.01. As a result, the Laplace transform of the integrator 89 is .01/s. The output of the integrator 89 is applied to one input of an eleventh summer 91.

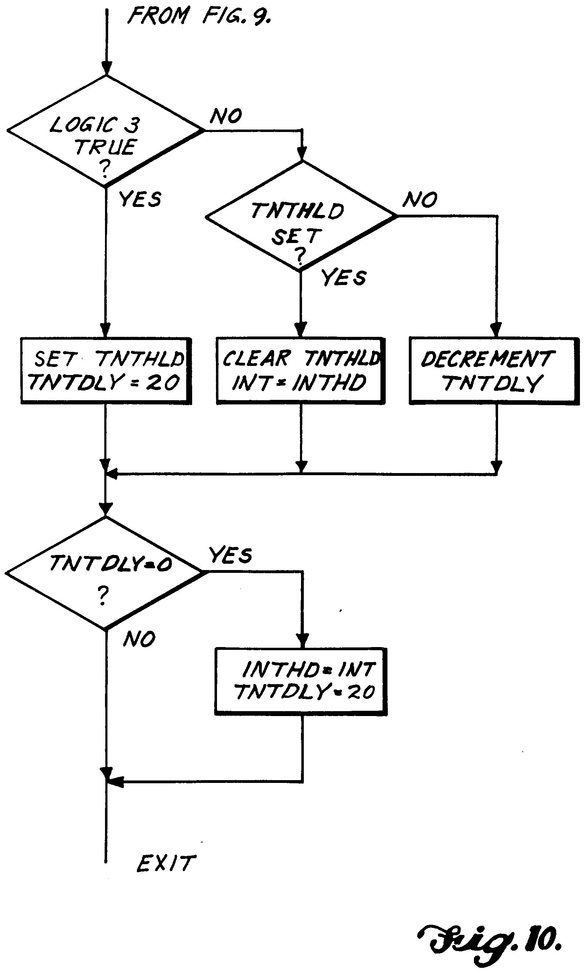

The integrator 89 is controlled by integrator reset logic 90. The integrator reset logic stores the last value of the integrator 55 for recall and either sets the integrator 55 to zero or to the last value of the integrator. When the autopilot of the airplane is not in an altitude hold mode of operation, or the autothrottle is turned off, both the integrator 89 and the last value of the integrator are set to zero. The integrator 89 is set to the last value of the integrator whenever the autopilot of the airplane commands the airspeed of the airplane to return to an "on speed" condition. FIGURES 9 and 10 illustrate logic intended to accomplish these results while avoiding other problems, such as the integrator 89 running away while trying to bring the aircraft on speed as a result of a wind change. In essence, the output of the integrator, taken during steady state fine tuned conditions, is updated periodically (e.g., every 20 seconds) provided no commanded or wind speed changes have occurred. The thusly developed "last" value of the integrator is also not updated if the airplane goes offspeed due to wind, and ground speed has not changed. The last value of the integrator is also not updated if the airspeed error is over a predetermined value, e.g., 3,7 km [2 knots], for an extended period of time (e.g., 120 seconds) and ground speed has not changed during that period of time. More specifically, the last value of the integrator is not updated under these conditions if the difference between the ground speed at the beginning of the extended period of time and the ground speed at the end of the extended period of time is less than some value, such as 12,96 km [knots]. The purpose of this limitation is to differentiate between "normal" speed errors due to winds producing a change in ground speed and cyclical errors due to miscomputation of the algorithm. Such errors may be due to either the "fine tune" being in error or the prediction correction being in error.

The first step of the logic illustrated in FIGURE 9 is a determination of whether or not the autothrottle of the aircraft is in a track mode of operation, i.e., if a particular speed control is being tracked by the autothrottle. If the autothrottle is not in a track mode of operation, the integrator value (INT) is set equal to zero. In addition, the last or held value of the integrator (INTHD) is set equal to zero. Then a track integrator flag (TNTINT) is set. After these steps have taken place, or if the aircraft is in a track mode of operation, a test is made to determine if a term denoted LOGIC 1 is true. LOGIC 1 is true if TNTINT is set, the aircraft is in an altitude hold mode of operation, a speed value is being tracked, and no speed change has been commanded. If LOGIC 1 is not true, a flag (TNTOFF) set in the manner described to denote that the aircraft is in a track mode of operation and offspeed is cleared. Thereafter, the logic cycles to the portion illustrated in FIGURE 10 and described below.

If LOGIC 1 is true, a test is made to determine if the aircraft is transitioning to an offspeed mode of operation. If the aircraft is transitioning to an offspeed mode of operation, an extended length of time timer (OFFDLY) is set equal to a predetermined value (120 seconds). Thereafter, a held or stored ground speed value (VGNDHD) is set equal to the ground speed of the aircraft (VGND). Next, the TNTOFF flag is set. Then, the logic cycles to the portion illustrated in FIGURE 10 and described below. In essence, this sequence of steps has initialized the extended length of time timer (OFFDLY) at the beginning of an offspeed condition.

If the aircraft is not transitioning to an offspeed condition, a test is made to determine if the aircraft is offspeed. If the aircraft is offspeed, the OFFDLY timer is decremented. Thereafter, the logic cycles to the portion illustrated in FIGURE 10 and described below. In essence, this sequence is a loop that is passed through during the period of time the aircraft is offspeed in order to determine if it will remain offspeed for the extended length of time established by the OFFDLY timer.

If the aircraft is not offspeed, a test is made to determine if the aircraft is transitioning to an onspeed condition. If the aircraft is transitioning to an onspeed condition, a test is made to determine if a term denoted LOGIC 2 is true. LOGIC 2 is true if the TNTOFF flag is set, the OFFDLY timer value is less than 0.0, and the absolute value of the difference between the held ground speed (VGNDHD) and the actual ground speed (VGND) is less than 12,96 km [7 knots]. If LOGIC 2 is true, a track integrator held flag (TNTHLD) is cleared. The TNTINT flag is also cleared. Thereafter, the logic cycles to the portion illustrated in FIGURE 10 and described below. In essence, this series of steps, as will be better understood from the following description of FIGURE 10, bypasses resetting the integrator 55 because the offspeed value existed for more than 120 seconds and the change in ground speed was less than 12,96 km [7 knots]. As also will be better understood from the following description of FIGURE 10, bypassing the resetting of the integrator is accomplished by clearing the TNTHLD flag. If the aircraft is not transitioning to an onspeed condition or if LOGIC 2 is not true, the TNTOFF flag is cleared prior to cycling to FIGURE 10.

The first step in the portion of the reset logic illustrated in FIGURE 10 is a test to determine if a term denoted LOGIC 3 is true. LOGIC 3 is true whenever the aircraft is not in a steady cruise state. More specifically, LOGIC 3 is true if a speed change has been commanded, the aircraft is offspeed, the aircraft is not in an altitude hold mode of operation, or if the aircraft is not tracking a specific speed command. If LOGIC 3 is true, the TNTHLD flag is set. Thereafter, a track integrator delay timer (TNTDLY) is set to a predetermined value (e.g., 20 seconds). Thus, as described below, the program tests the value of a TNTDLY timer. If LOGIC 3 is not true, the TNTHLD flag is tested. If the TNTHLD flag is set, the TNTHLD flag is cleared. Then, the integrator value (INT) is set equal to the integrator held value (INTHD). Thereafter, the TNTDLY timer is tested. If the TNTHLD flag is not set, the TNTDLY timer is decremented. Thereafter, the program cycles to the TNTDLY timer test.

If the TNTDLY timer is not equal to zero, the logic cycle is repeated. If the TNTDLY timer is equal to zero, the held integrator value (INTHD) is set equal to the integrator value (INT). Thereafter, the integrator delay timer (TNTDLY) is again set equal to a predetermined value (e.g., 20 seconds). Then, the logic cycle is repeated. The logic cycle may be repeated immediately or, if the logic cycle forms a portion of an overall program, it may be repeated after other steps of the overall program have taken place.

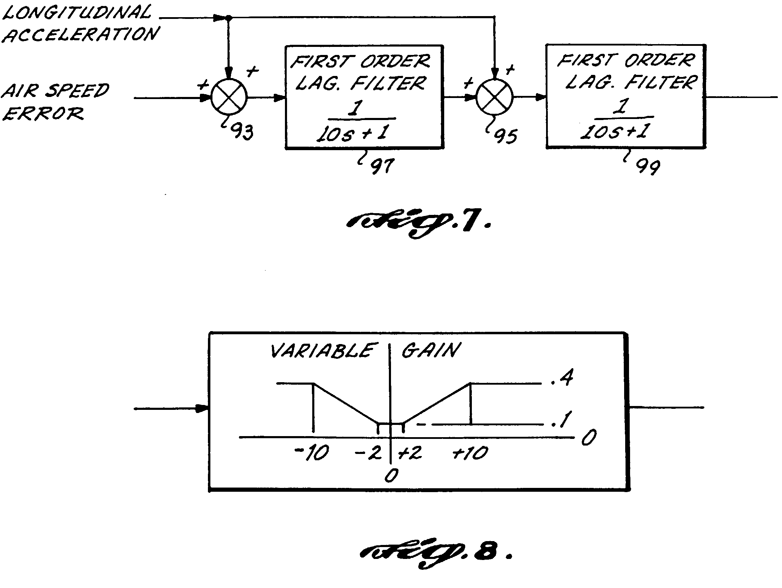

Turning to FIGURE 7, preferably the filter network 85 includes two (twelfth and thirteenth) summers 93 and 95 and two first order filters 97 and 99. The twelfth and thirteenth summers 93 and 95 are both additive summers. The airspeed error, i.e., the output of the tenth summer 81, is summed by the twelfth summer 93 with the longitudinal acceleration of the airplane. The result of the summation is filtered by one of the first order lag filters 97. The output of this first order lag filter 97 is summed by the thirteenth summer 95 with the longitudinal acceleration and the result of the summation is applied to the input of the other first order lag filter 99. The output of this first order lag filter is a complemented (i.e., filtered) airspeed error signal. Preferably, both first order lag filters have a time constant of 10 and, thus, can be represented by the Laplace transform

$$\frac{1}{10s + 1} .$$

As shown in FIGURE 1, the output of the second first order lag filter 99 is applied through a fourth switch 101 and a second variable gain filter 103 to the second input of the eleventh summer 91.

In order to prevent the fine tune output of the variable gain, continuous airspeed error control loop 80 from affecting the linear capture of the target airspeed when a thrust increment is being produced as a result of a commanded airspeed change, the third and fourth switches 87 and 101 are open when a thrust increment signal is being produced in the manner illustrated in FIGURE 6 and described above. As a result, a thrust increment produced as a result of a commanded airspeed change uniformly accelerates an airplane incorporating this invention to the commanded target airspeed.

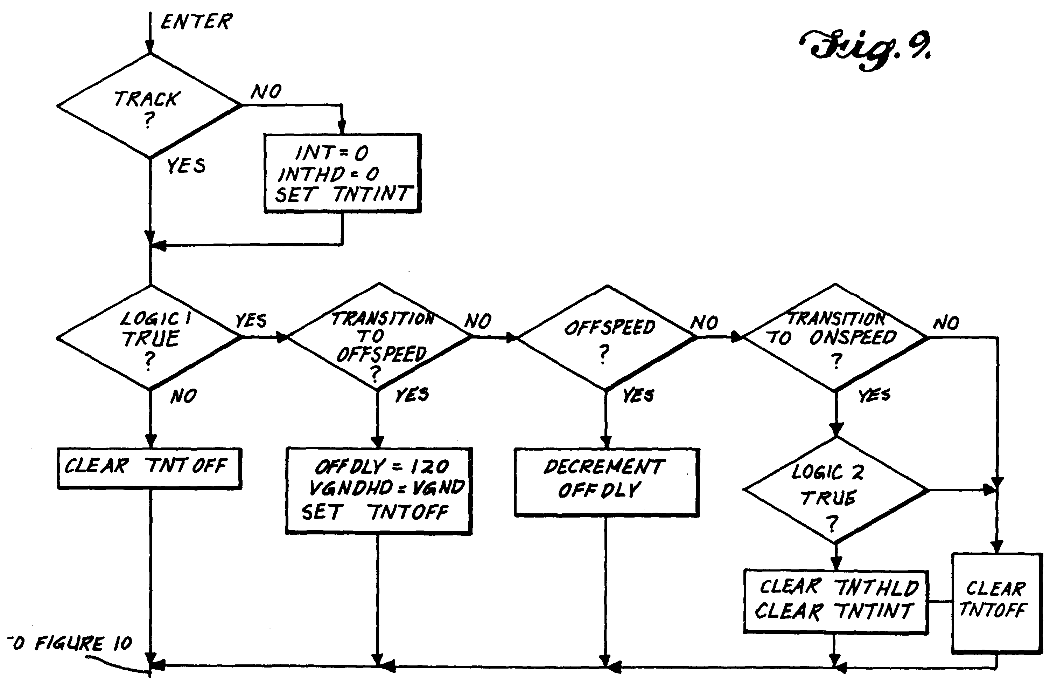

As shown in FIGURE 8, the gain of the first and second variable gain circuits 83 and 103 depends upon the magnitude of the input applied to the gain circuits, i.e., the magnitude of the airspeed error. If the airspeed error is less than a predetermined value, such as 3,7 km [±2 knots], the gain applied to the input signal is low--0.1, for example. Above a higher predetermined value, 18,52 km [±10 knots], for example, the gain applied to the input signal is higher--0.4, for example. A smooth ramp transition occurs between these limits, i.e., between 3,7 km [±2 knots] and 18,52 km [±10 knots].

As shown in FIGURE 1, the output of the eleventh summer 91 is additively summed with the output of the sixth summer 39 by a fourteenth summer 105. The results of this summation are subtractively summed with the actual thrust generated by the aircraft's engines, as determined by a conventional engine thrust calculation circuit 107 by a fifteenth summer 109. The output of the fifteenth summer 109, which is the difference between the actual thrust and the predicted steady state thrust value modified in the manner heretofore described, is applied via a servo controller 111 to the throttle servo 113 of the engines 115. Sensors on the engines provide the signals utilized by the engine thrust calculation circuit 107 to determine actual thrust.

As will be readily appreciated by those skilled in the airplane control system art from the foregoing description, this invention provides an automatic airspeed control system for airplane autothrottles that provides rapid, accurate thrust settings when an airplane is climbing, making a turn, encountering winds, and changing airspeed with a minimum of lag and error. These results are achieved by summing a predicted thrust value with thrust values based on the action taking place. If the aircraft is climbing, the thrust value to be summed is determined by the difference between climb thrust and cruise thrust modified by a factor that creates a smooth transition between climb and cruise. If a change in the airspeed of the airplane is commanded by the autopilot, an airspeed change thrust value is automatically summed with the predicted thrust value to create the thrust value used to control the thrust produced by the engines of the airplane. Similarly, if winds or movement of the aircraft, i.e., a turn, causes an airspeed error, a compensating thrust value is automatically generated and summed with the predicted thrust value to create the control thrust value.

## Claims

1. Autothrottle that produces a predicted steady state thrust value for use in controlling the thrust produced by the engines of an airplane, characterized by an automatic airspeed control system, including:

   modification means (29, 39) for modifying said predicted steady state thrust value with incremental thrust values based on airspeed errors and altitude changes; and
   fine tune means (91, 105) for fine tuning said modified, predicted steady state thrust value based on the difference (81) between the actual airspeed of an airplane and the desired airspeed of the airplane.

2. Autothrottle as claimed in claim 1, wherein said modification means includes:

   means (23) for producing a prediction correction value based on the difference between said predicted steady state thrust and the actual thrust produced by the engines of said aircraft at cruise; and
first summation (27) means for summing said predicted steady state thrust value with said predicted correction value to produce a corrected predicted steady state thrust value.

3. Autothrottle as claimed in claims 1 or 2, wherein said modification means includes a second summation means (29) for summing an altitude acquire change thrust value with said corrected, predicted steady state thrust value.

4. Autothrottle as claimed in claim 3, wherein said altitude acquire change thrust value is determined (37) by multiplying the difference between the thrust needed for the airplane to climb from a starting altitude to a cruise altitude to be acquired minus the thrust at the cruise altitude by a smoothing factor.

5. Autothrottle as claimed in claim 4, wherein said smoothing factor is determined (37) by taking the square root of the difference (35) between the cruise altitude to be acquired and the current altitude divided by the difference (33) between the cruise altitude to be acquired and the starting altitude.

6. Autothrottle as claimed in claim 1, 2, 3, 4, or 5, wherein said fine tune means includes:

   third summation means (81) for determining the difference between the actual airspeed of the airplane and the commanded (target) airspeed; and
   variable gain means (83) for modifying the amplitude of said difference between said actual and target airspeeds based on the difference therebetween.

7. Autothrottle as claimed in claim 6, wherein:

   (a) said variable gain means (83) includes:

      (i) two channels, one of said channels including an integrator (89) for integrating said airspeed difference, the other of said channels including a filter (85) for filtering said airspeed difference and both of said channels including a variable gain amplifier (103); and
      (ii) a fourth summation means (91) for summing the outputs of said channels to form a fine tune value; and

   (b) said fine tune means also includes a fifth summation means (105) for summing the output of said second summation means (29) with the fine tune value formed by said fourth summation means (91).

8. Autothrottle as claimed in claim 7, wherein said fine tune means also includes reset logic (90) for resetting said integrator (89) to either zero or the last value generated by said integrator under predetermined conditions.

9. Autothrottle as claimed in claim 8, wherein said predetermined conditions include:

resetting both said integrator (89) and the last value of said integrator to zero when said airplane is not in an altitude hold mode of operation and said autothrottle is turned off; and said integrator (89) is set to the last value of said integrator whenever the autothrottle of said airplane commands the airspeed of said airplane to return to an "on speed" condition.

10. Autothrottle as claimed in claims 1 through 9, wherein said modification means includes a sixth summation means (39) for summing an airspeed change thrust increment value based either on a change in commanded (target) airplane speed of the airplane or a change in the speed of the airplane not resulting from a change in the commanded (target) airspeed with said corrected, predicted steady state thrust value (29).

11. Autothrottle as claimed in Claim 10, wherein said airspeed change thrust increment value is determined (fig. 5&6) by determining if a change in airspeed is based on a commanded (target) airspeed change or a non-commanded (target) airplane speed change and controlling said airspeed change thrust increment value in accordance with said determination.

12. Autothrottle as claimed in Claim 11, wherein said determination (43,51,52,53,54) is made by determining if the rate of change of airspeed is slow or rapid, rapid airspeed changes indicating a change in the commanded (target) airplane speed and slow airspeed changes indicating a change in a non-commanded (target) airplane speed.

13. Autothrottle as claimed in Claim 12, including seventh summation means (43) for summing the actual airspeed of the airplane with the commanded (target) airspeed of the airplane to determine the error therebetween and including hysteresis means (51-54) for generating speed change control signals when said error rises above a particular value and terminating said speed change control signals when said error drops below a predetermined value.

14. Autothrottle as claimed in Claim 13, wherein said hysteresis means (51-54) produces four speed change signals, two of said speed change signals being produced when a change in airspeed is based on a commanded (target) airplane speed change and two of said speed change signals being produced when a change in airspeed is not based on a commanded (target) airplane speed change.

15. Autothrottle as claimed in Claim 14, wherein one of said speed change signals, produced when a change in airspeed is based on a commanded (target) airplane speed change, is generated when said speed error is above a first predetermined level and wherein the other of said speed change signals, produced when a change in airspeed is based on a commanded (target) airplane speed change, is generated when said speed error is above a second predetermined level, said second predetermined level being greater than said first predetermined level.

16. Autothrottle as claimed in Claim 15, wherein one said speed change signals, produced when a change in airspeed is not based on a commanded (target) airplane speed, is generated when said speed error is above a first predetermined level and wherein said other speed change signal, produced when a change in airspeed is not based on a commanded (target) airplane speed, is generated when said speed error rises above a second predetermined level, said second predetermined level being greater than said first predetermined level.

17. Autothrottle as claimed in Claim 16, wherein said airspeed change thrust increment value is based on a normalized thrust value corrected (61) for altitude multiplied (63-69) by a factor whose magnitude is based on the state of said speed change signals.

18. Autothrottle as claimed in Claim 8, wherein said reset logic (90) does not reset said integrator (89) to zero or the last value generated by said integrator when the difference between ground speed and airspeed lies below a predetermined value.

**Patentansprüche**

1. Autodrossel, die einen vorhergesagten bzw. vorausgesetzten Stationärzustands-Schubwert für die Verwendung beim Steuern bzw. Regeln des durch die Triebwerke eines Flugzeugs erzeugten Schubs erzeugt, **gekennzeichnet** durch ein automatisches Eigengeschwindigkeitsteuer- bzw. -regelsystem, umfassend:

ein Modifizierungsmittel (29, 39) zum Modifizieren des vorausgesagten bzw. vorausgesetzten Stationärzustands-Schubwerts mit inkremen-

tellen Schubwerten basierend auf Eigenge-schwindigkeitsfehlern und Höhenänderungen; und

ein Feinabstimmittel (91, 105) zum Feinabstimmen des modifizierten, vorausgesagten bzw. vorausgesetzten Stationärzustands-Schubwerts basierend auf der Differenz (81) zwischen der aktuellen Eigengeschwindigkeit eines Flug-zeugs und der gewünschten Eigengeschwin-digkeit des Flugzeugs.

2. Autodrossel nach Anspruch 1, worin das Modifizierungsmittel folgendes umfaßt:

ein Mittel (23) zum Erzeugen eines Vorhalt-bzw. Voraussagekorrekturwerts basierend auf der Differenz zwischen dem vorausgesagten bzw. vorausgesetzten Stationärzustandsschub und dem aktuellen Schub, der durch die Triebwerke des Flugzeugs beim Reiseflug erzeugt wird; und

ein erstes Summmierungsmittel (27) zum Sum-mieren des vorausgesagten bzw. vorausge-setzten Stationärzustands-Schubwerts mit dem vorausgesagten bzw. vorausgesetzten Korrekturwert zum Erzeugen eines korrigierten vor-ausgesagten bzw. vorausgesetzten Stationär-zustands-Schubwerts.

3. Autodrossel nach Anspruch 1 oder 2, worin das Modifizierungsmittel ein zweites Summierungsmittel (29) zum Summieren eines Höhenerreichungsänderungs-Schubwerts mit dem korrigierten, vor-ausgesagten bzw. vorausgesetzten Stationärzu-stands-Schubwert umfaßt.

4. Autodrossel nach Anspruch 3, worin der Höhenerreichungsänderungs-Schubwert bestimmt (37) wird durch Multiplizieren der Differenz zwischen dem Schub, der von dem Flugzeug zum Steigen von einer Ausgangshöhe zu einer zu erreichenden Reiseflughöhe benötigt wird, minus dem Schub bei der Reiseflughöhe mit einem Glättungsfaktor.

5. Autodrossel nach Anspruch 4, worin der Glättungsfaktor bestimmt (37) wird durch Ermitteln der Quadratwurzel aus der Differenz (35) zwischen der zu erreichenden Reiseflughöhe und der gegenwärtigen Höhe, geteilt durch die Differenz (33) zwischen der zu erreichenden Reiseflughöhe und der Ausgangshöhe.

6. Autodrossel nach Anspruch 1, 2, 3, 4 oder 5, worin das Feinabstimmittel folgendes umfaßt:

ein drittes Summierungsmittel (81) zum Bestimmen der Differenz zwischen der aktuellen Eigengeschwindigkeit des Flugzeugs und der befohlenen (Ziel-)Eigengeschwindigkeit; und

ein Mittel (83) variablen Verstärkungsgrads zum Modifizieren der Amplitude der Differenz zwischen der aktuellen Eigengeschwindigkeit und der Zieleigengeschwindigkeit basierend auf der Differenz zwischen denselben.

7. Autodrossel nach Anspruch 6, worin:

(a) das Mittel (83) variablen Verstärkungsgrads folgendes umfaßt:

(i) zwei Kanäle, wobei einer der Kanäle einen Integrator (89) zum Integrieren der Eigengeschwindigkeitsdifferenz aufweist, während der andere der Kanäle ein Filter (85) zum Filtern der Eigengeschwindigkeitsdifferenz aufweist und beide Kanäle einen Verstärker (103) variablen Verstärkungsgrads aufweisen; und

(ii) ein viertes Summierungsmittel (91) zum Summieren der Ausgangsgrößen der Kanäle zur Bildung eines Feinabstimmwerts; und

(b) das Feinabstimmittel außerdem ein fünftes Summierungsmittel (105) zum Summieren der Ausgangsgröße des zweiten Summierungsmittels (29) mit dem von dem vierten Summierungsmittel (91) gebildeten Feinabstimmwert aufweist.

8. Autodrossel nach Anspruch 7, worin das Feinabstimmittel außerdem eine Rücksetzlogik (90) aufweist zum Rücksetzen des Integrators (89) unter vorbestimmten Bedingungen auf entweder Null oder den letzten von dem Integrator erzeugten Wert.

9. Autodrossel nach Anspruch 8, worin die vorbestimmten Bedingungen folgendes umfassen:

Rücksetzen sowohl des Integrators (89) als auch des letzten Werts des Integrators auf Null, wenn das Flugzeug nicht in einer Höhenhaltebetriebsweise ist und die Autodrossel abgeschaltet ist; und

der Integrator (89) auf den letzten Wert des Integrators gesetzt wird, wann immer die Autodrossel des Flugzeugs befiehlt, daß die Eigengeschwindigkeit des Flugzeugs in einen "Auf-Geschwindigkeit"-Zustand zurückkehren soll.

10. Autodrossel, wie in den Ansprüchen 1 bis 9 beansprucht, worin das Modifizierungsmittel ein sechstes Summierungsmittel (39) zum Summieren eines EigengeschwindigkeitsänderungsSchubinkrementwerts, basierend entweder auf einer Änderung in der befohlenen (Ziel-)Flugzeuggeschwindigkeit des Flugzeugs oder einer Änderung in der Geschwindigkeit des Flugzeugs, die nicht aus einer Änderung in der befohlenen (Ziel-)Eigengeschwindigkeit resultiert, mit dem korrigierten, vorausgesagten bzw. vorausgesetzten Stationärzustands-Schubwert (29) umfaßt.

11. Autodrossel nach Anspruch 10, worin der Eigengeschwindigkeitsänderungs-Schubinkrementwert bestimmt (Fig. 5 und 6) wird durch Bestimmen, ob eine Änderung in der Eigengeschwindigkeit auf einer befohlenen (Ziel-)Eigengeschwindigkeitsänderung oder einer nichtbefohlenen (Ziel-)Flugzeuggeschwindigkeitsänderung basiert, und Steuern bzw. Regeln des Eigengeschwindigkeitsänderungs-Schubinkrementwerts gemäß der genannten Bestimmung.

12. Autodrossel nach Anspruch 11, worin die Bestimmung (43, 51, 52, 53, 54) gemacht wird durch Bestimmen, ob die Änderungsrate der Eigengeschwindigkeit langsam oder schnell ist, wobei schnelle Eigengeschwindigkeitsänderungen eine Änderung in der befohlenen (Ziel-)Flugzeuggeschwindigkeit angeben und langsame Eigengeschwindigkeitsänderungen eine Änderung in einer nichtbefohlenen (Ziel-)Flugzeuggeschwindigkeit angeben.

13. Autodrossel nach Anspruch 12, umfassend ein siebentes Summierungsmittel (43) zum Summieren der aktuellen Eigengeschwindigkeit des Flugzeugs mit der befohlenen (Ziel-)Eigengeschwindigkeit des Flugzeugs zum Bestimmen des Fehlers zwischen denselben, und umfassend ein Hysteresemittel (51-54) zum Erzeugen von Geschwindigkeitsänderungssteuer- bzw. -regelsignalen, wenn der genannte Fehler über einen speziellen Wert ansteigt, und Beenden der Geschwindigkeitsänderungssteuer- bzw. -regelsignale, wenn der genannte Fehler unter einen vorbestimmten Wert abfällt.

14. Autodrossel nach Anspruch 13, worin das Hysteresemittel (51-54) vier Geschwindigkeitsänderungssignale erzeugt, wobei zwei der Geschwindigkeitsänderungssignale erzeugt werden, wenn eine Änderung in der Eigengeschwindigkeit auf einer befohlenen (Ziel-)Flugzeuggeschwindigkeitsänderung basiert, und zwei der Geschwindigkeitsänderungssignale erzeugt werden, wenn eine Änderung in der Eigengeschwindigkeit nicht auf einer befohlenen (Ziel-)Flugzeuggeschwindigkeitsänderung basiert.

15. Autodrossel nach Anspruch 14, worin eines der Geschwindigkeitsänderungssignale, das erzeugt wird, wenn eine Änderung in der Eigengeschwindigkeit auf einer befohlenen (Ziel-)Flugzeuggeschwindigkeitsänderung basiert, erzeugt wird, wenn der Geschwindigkeitsfehler oberhalb eines ersten vorbestimmten Niveaus ist, und worin das andere der Geschwindigkeitsänderungssignale, das erzeugt wird, wenn eine Änderung in der Eigengeschwindigkeit auf einer befohlenen (Ziel-)Flugzeuggeschwindigkeitsänderung basiert, erzeugt wird, wenn der Geschwindigkeitsfehler oberhalb eines zweiten vorbestimmten Niveaus ist, wobei das zweite vorbestimmte Niveau größer als das erste vorbestimmte Niveau ist.

16. Autodrossel nach Anspruch 15, worin eines der Geschwindigkeitsänderungssignale, das erzeugt wird, wenn eine Änderung in der Eigengeschwindigkeit nicht auf einer befohlenen (Ziel-)Flugzeuggeschwindigkeit basiert, erzeugt wird, wenn der Geschwindigkeitsfehler oberhalb eines ersten vorbestimmten Niveaus ist, und worin das andere Geschwindigkeitsänderungssignal, das erzeugt wird, wenn eine Änderung in der Eigengeschwindigkeit nicht auf einer befohlenen (Ziel-)-Flugzeuggeschwindigkeit basiert, erzeugt wird, wenn der Geschwindigkeitsfehler über ein zweites vorbestimmtes Niveau ansteigt, wobei das zweite vorbestimmte Niveau größer als das erste vorbestimmte Niveau ist.

17. Autodrossel nach Anspruch 16, worin der Eigengeschwindigkeitsänderungs-Schubinkrementwert basiert auf einem für eine Höhe korrigierten (61) normierten Schubwert, multipliziert (63-69) mit einem Faktor, dessen Größe auf dem Zustand der Geschwindigkeitsänderungssignale basiert.

18. Autodrossel nach Anspruch 8, worin die Rückstelllogik (90) den Integrator (89) nicht auf Null oder den letzten von dem Integrator erzeugten Wert zurückstellt, wenn die Differenz zwischen der Absolutgeschwindigkeit und der Eigengeschwindigkeit unter einem vorbestimmten Wert liegt.

**Revendications**

1. Organe de réglage automatique de poussée qui produit une valeur prédite de poussée de régime permanent destinée à être utilisée pour le réglage de la poussée produite par les réacteurs d'un avion, caractérisé par un système de réglage automatique de vitesse aérodynamique qui comprend :

un dispositif (29, 39) de modification de la valeur prédite de poussée de régime permanent par des valeurs élémentaires de poussée qui dépendent des erreurs de vitesse aérodynamique et des changements d'altitude, et

un dispositif (91, 105) d'accord fin de la valeur prédite modifiée de poussée de régime permanent d'après la différence (81) entre la vitesse aérodynamique réelle d'un avion et la vitesse aérodynamique voulue de l'avion.

2. Organe de réglage automatique de poussée selon la revendication 1, dans lequel le dispositif de modification comprend :

un dispositif (23) destiné à produire une valeur de correction de prédiction qui dépend de la différence entre la poussée prédite de régime permanent et la poussée réelle produite par les réacteurs de l'aéronef en vol de croisière, et

un premier dispositif de sommation (27) destiné à ajouter la valeur prédite de poussée de régime permanent à la valeur de correction prédite pour la production d'une valeur prédite corrigée de poussée de régime permanent.

3. Organe de réglage automatique de poussée selon la revendication 1 ou 2, dans lequel le dispositif de modification comporte un second dispositif (29) de sommation d'une valeur de poussée de changement d'acquisition d'altitude à la valeur prédite corrigée de poussée de régime permanent.

4. Organe de réglage automatique de poussée selon la revendication 3, dans lequel la valeur de poussée de changement d'acquisition d'altitude est déterminée (37) par modification de la différence entre la poussée nécessaire pour que l'avion monte d'une altitude initiale à une altitude de croisière qui doit être atteinte et la poussée à l'altitude de croisière par un facteur de lissage.

5. Organe de réglage automatique de poussée selon la revendication 4, dans lequel le facteur de lissage est déterminé (37) à l'aide de la racine carrée de la différence (35) entre l'altitude de croisière qui doit être atteinte et l'altitude actuelle divisée par la différence (33) entre l'altitude de croisière qui doit être atteinte et l'altitude initiale.

6. Organe de réglage automatique de poussée selon la revendication 1, 2, 3, 4 ou 5, dans lequel le dispositif d'accord fin comprend :

un troisième dispositif de sommation (81) destiné à déterminer la différence entre la vitesse aérodynamique réelle de l'avion et la vitesse aérodynamique commandée (cible), et

un dispositif (83) à gain variable destiné à modifier l'amplitude de la différence entre les vitesses aérodynamiques réelle et cible d'après la différence entre elles.

7. Organe de réglage automatique de poussée selon la revendication 6, dans lequel :

(a) le dispositif (83) à gain variable comprend :

(i) deux canaux dont l'un contient un intégrateur (89) qui intègre la différence de vitesse aérodynamique et l'autre comprend un filtre (85) qui filtre la différence de vitesse aérodynamique, les deux canaux comprenant un amplificateur à gain variable (103), et

(ii) un quatrième dispositif (91) de sommation des signaux de sortie des canaux pour la formation d'une valeur d'accord fin, et

(b) le dispositif d'accord fin comprend aussi un cinquième dispositif (105) de sommation du signal de sortie du second dispositif de sommation (29) et de la valeur d'accord fin formée par le quatrième dispositif de sommation (91).

8. Organe de réglage automatique de poussée selon la revendication 7, dans lequel le dispositif d'accord fin comprend aussi un circuit logique de remise à zéro (90) destiné à remettre l'intégrateur (89) soit à zéro soit à la dernière valeur créée par l'intégrateur dans des conditions prédéterminées.

9. Organe de réglage automatique de poussée selon la revendication 8, dans lequel les conditions prédéterminées comprennent :

la remise à zéro de l'intégrateur (89) et de la dernière valeur de l'intégrateur lorsque l'avion n'est pas en mode de maintien d'altitude et l'organe de réglage automatique de poussée ne fonctionne pas, et

la mise de l'intégrateur (89) à la dernière valeur de l'intégrateur chaque fois que l'organe de réglage automatique de l'avion commande le retour de la vitesse aérodynamique de l'avion à une condition de mise en vitesse.

10. Organe de réglage automatique de poussée selon les revendications 1 à 9, dans lequel le dispositif de modification comporte une sixième dispositif (39) de sommation d'une valeur élémentaire de poussée de changement de vitesse aérodynamique en fonction soit d'un changement de vitesse commandé (cible) de l'avion soit d'un changement de vitesse de l'avion qui ne résulte pas d'un changement de vitesse aérodynamique commandé (cible) à l'aide de la valeur prédite corrigée de poussée de régime permanent (29).

**11.** Organe de réglage automatique de poussée selon la revendication 10, dans lequel la valeur élémentaire de poussée de changement de vitesse aérodynamique est déterminée (figures 5 et 6) par détermination du fait qu'un changement de vitesse aérodynamique dépend d'un changement de vitesse aérodynamique commandé (cible) ou d'un changement de vitesse non commandé (cible) de l'avion et du réglage de la valeur élémentaire de poussée de changement de vitesse aérodynamique en fonction de cette détermination.

**12.** Organe de réglage automatique de poussée selon la revendication 11, dans lequel ladite détermination (43, 51, 52, 53, 54) est formée par détermination du fait que la vitesse de variation de la vitesse aérodynamique est lente ou rapide, les changements rapides de vitesse aérodynamique indiquant un changement de vitesse commandé (cible) de l'avion et les changements lents de vitesse aérodynamique indiquant un changement de vitesse non commandé (cible) de l'avion.

**13.** Organe de réglage automatique de poussée selon la revendication 12, comprenant un septième dispositif (43) de sommation de la vitesse aérodynamique réelle de l'avion et de la vitesse aérodynamique commandée (cible) de l'avion pour la détermination de l'erreur entre elles, et comprenant un dispositif d'hystérésis (51-54) destiné à créer les signaux de réglage de changement de vitesse lorsque l'erreur dépasse une valeur particulière et à interrompre les signaux de réglage de changement de vitesse lorsque l'erreur tombe au-dessous d'une valeur prédéterminée.

**14.** Organe de réglage automatique de poussée selon la revendication 13, dans lequel le dispositif d'hystérésis (51-54) crée quatre signaux de changement de vitesse, deux des signaux de changement étant produits lorsqu'un changement de vitesse aérodynamique dépend d'un changement de vitesse commandé (cible) de l'avion et deux des signaux de changement d vitesse étant produits lorsqu'un changement de vitesse aérodynamique ne dépend pas d'un changement de vitesse commandé (cible) de l'avion.

**15.** Organe de réglage automatique de poussée selon la revendication 14, dans lequel l'un des signaux de changement de vitesse, produit lorsqu'un changement de vitesse aérodynamique dépend d'un changement de vitesse commandé (cible) de l'avion, est créé lorsque l'erreur de vitesse dépasse un premier niveau prédéterminé, et dans lequel l'autre des signaux de changement de vitesse, produit lorsqu'un changement de vitesse aérodynamique dépend d'un changement de vitesse commandé (cible) de l'avion, est créé lorsque l'erreur de vitesse dépasse un second niveau prédéterminé, le second niveau prédéterminé étant supérieur au premier niveau prédéterminé.

**16.** Organe de réglage automatique de poussée selon la revendication 15, dans lequel l'un des signaux de changement de vitesse, produit lorsqu'un changement de vitesse aérodynamique ne dépend pas d'une vitesse commandée (cible) de l'avion, est créé lorsque l'erreur de vitesse dépasse un premier niveau prédéterminé, et dans lequel l'autre signal de changement de vitesse, produit lorsqu'un changement de vitesse aérodynamique ne dépend pas d'une vitesse commandée (cible) de l'avion, est créé lorsque l'erreur de vitesse dépasse un second niveau prédéterminé, le second niveau prédéterminé étant supérieur au premier niveau prédéterminé.

**17.** Organe de réglage automatique de poussée selon la revendication 16, dans lequel la valeur élémentaire de poussée de changement de vitesse aérodynamique dépend d'une valeur normalisée de poussée corrigée (61) de l'altitude et multipliée (63-69) par un facteur dont l'amplitude dépend de l'état des signaux de changement de vitesse.

**18.** Organe de réglage automatique de poussée selon la revendication 8, dans lequel la logique de remise à zéro (90) ne remet pas l'intégrateur (89) à zéro ou à la dernière valeur créée par l'intégrateur lorsque le différence entre la vitesse au sol et la vitesse aérodynamique est inférieure à une valeur prédéterminée.

Fig. 1.

PREDICTED STEADY STATE THRUST

PREDICTION CORRECTION (FIG.2)

ACTUAL THRUST

ENGINE THRUST CALCULATION 107

PREDICTED THRUST

THRUST ERROR

SERVO CONTROL 111

THROTTLE SERVO 113

ENGINE 115

29  39  105  109

21

STARTING ALTITUDE
CRUISE ALTITUDE TO BE ACQUIRED
CURRENT ALTITUDE
CLIMB THRUST
CRUISE THRUST

ALTITUDE ACQUIRE CHANGE (FIG. 3.)

ΔT  31

COMMANDED AND WIND AIRSPEED CHANGE (FIG. 5 & 6)

THRUST INCREMENT

INTEGRATOR (.01/S) 89

FINE TUNE

91  80

TARGET AIRSPEED
ACTUAL AIRSPEED

81  VARIABLE GAIN (FIG. 8) 83  87

RESET LOGIC (FIG. 7, 8) 90

FILTER (FIG. 7) 85

101  VARIABLE GAIN (FIG. 8) 103

TRACK
SPEED CHANGE
ALTITUDE HOLD
GROUND SPEED
LONGITUDINAL ACCEL.

EP 0 482 250 B1

Fig.2.

Fig.3.

Fig. 4.

CRUISE ALTITUDE TO BE ACQUIRED

POINT AT WHICH ALTITUDE ACQUIRE ENDS

Δh

PRESENT ALTITUDE

d

POINT AT WHICH ALTITUDE ACQUIRE STARTS

LINEAR THRUST REDUCTION

CRUISE THRUST

REFERENCE ALTITUDE

CLIMB PATH

CLIMB THRUST

ΔT

RATE OF CHANGE OF PATH

Fig.5.

EP 0 482 250 B1

*Fig.6.*

NORMALIZED THRUST VALUE (1000 lbs.)

ALTITUDE CORRECTION (.0004.)

ALTITUDE

61

MULTIPLIER (.1) 63

MULTIPLIER (.4) 65

MULTIPLIER (1) 67

MULTIPLIER (4) 69

INVERTER (-1) 71

OFFSPEED 1

OFFSPEED 2

SPEED CHANGE 1

SPEED CHANGE 2

OFFDEC

THRUST INCREMENT

EP 0 482 250 B1

LONGITUDINAL
ACCELERATION

AIR SPEED
ERROR

⊗ 93  +  +

FIRST ORDER
LAG. FILTER
$$\frac{1}{10s+1}$$

97

⊗ 95  +  +

FIRST ORDER
LAG. FILTER
$$\frac{1}{10s+1}$$

99

*Fig.7.*

VARIABLE | GAIN

.4

.1

0

-10   -2 | +2   +10

0

*Fig.8.*

EP 0 482 250 B1

ENTER

*Fig. 9.*

TRACK ? — NO →

INT = 0
INTHD = 0
SET TNTINT

YES ↓

LOGIC 1 TRUE ? — YES → TRANSITION TO OFFSPEED ? — NO → OFFSPEED ? — NO → TRANSITION TO ONSPEED ? — NO →

NO ↓ (LOGIC 1) | YES ↓ (TRANSITION TO OFFSPEED) | YES ↓ (OFFSPEED) | YES ↓ (TRANSITION TO ONSPEED)

CLEAR TNT OFF

OFFDLY = 120
VGNDHD = VGND
SET TNTOFF

DECREMENT OFFDLY

LOGIC 2 TRUE ? →

CLEAR TNTHLD
CLEAR TNTINT

CLEAR TNTOFF

TO FIGURE 10

EP 0 482 250 B1

FROM FIG. 9.

LOGIC 3 TRUE ? — NO

YES

TNTHLD SET ? — NO

YES

| SET TNTHLD TNTDLY = 20 | CLEAR TNTHLD INT = INTHD | DECREMENT TNTDLY |

TNTDLY = 0 ? — YES

NO

INTHD = INT TNTDLY = 20

EXIT

Fig. 10.